(19)

Europäisches
Patentamt
European
Patent Office
Office européen
des brevets

(11) **EP 2 037 291 A1**

(12) **EUROPEAN PATENT APPLICATION**

(43) Date of publication:
**18.03.2009 Bulletin 2009/12**

(51) Int Cl.:
***G01S 5/14*** (2006.01)

(21) Application number: **07380249.8**

(22) Date of filing: **11.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **GMV Aerospace and Defence S.A.
28760 Tres Cantos (Madrid) (ES)**

(72) Inventors:
• **Azaola Sáenz, Miguel
  28760 Tres Cantos (Madrid) (ES)**
• **López Almansa, José Maria
  28760 Tres Cantos (Madrid) (ES)**

(74) Representative: **Carpintero Lopez, Francisco et al
Herrero & Asociados, S.L.
Alcalá 35
28014 Madrid (ES)**

(54) **Integrity monitoring method for GNSS navigation based on historical information**

(57) The invention relates to a method of estimating the clock-position of a GNSS receiver based on pseudorange measurements $\rho_i$ of a group of epochs $i$ of measurement, $i=1,...,N$, where $M_i$ is the number of pseudorange measurements in the epoch $i$; the method comprises:
- constructing a floating path from change of state estimations $\tilde{V}_i$ between successive epochs which are provided as input by a change of state estimation algorithm;
- determining an anchor point for said path by anchor point for said path by an iterative least squares process estimating the state vector $\tilde{S}_1$ of the receiver in a preestablished anchor epoch within the measurement epochs of the path, said least squares process being carried out by means of a valid observation matrix $H$ for the $N$ epochs defining said floating path, said observation matrix $H$ being constructed by juxtaposing the observation matrices $H_i$ associated to different epochs $i=1,...,N$, wherein each observation matrix $H_i$ is a four-column matrix the rows of which are the line of sight unit vectors of the different satellites in sight in the epoch $i$, juxtaposed with a 1 associated to the receiver clock component.

**EP 2 037 291 A1**

**Description**

Field of the Invention

The present invention is comprised in the field of satellite positioning (GNSS), and more particularly of the autonomous integrity mechanisms (RAIM) of GNSS equipment.

It is generally applicable to all type of GNSS applications which are subject to the Integrity concept. This is the case of the applications known as:

- ■ "Safety Critical", i.e., the applications in which a system error (such as positioning error in a GNSS system) can place the safety of goods and/or people at risk. The main example of this type of applications is formed by flight and air navigation operations.
- ■ "Liability Critical", i.e., the applications in which a system error can involve legal liabilities for the operator of the system. This is the case of the applications known as "Road Charging", "Road Pricing", "Road User Charging" (RUC), "Virtual Tolling" or "Electronic Fee Collection" (EFC). It is also the case of GNSS applications for the legal prosecution of violations (such as traffic violations) whenever information about the position and/or velocity of the possible offender at a certain time instant is required.

The common feature of the two mentioned contexts is the need for the uncertainty with which the position and time data are known to be limited with a very high confidence level, i.e. the need for integrity.

The present invention is generally applicable to any GNSS positioning equipment which is subject to Integrity requirements and must provide said Integrity autonomously, especially when there are no limitations as regards the degree of hostility of the environment in which said equipment may be used.

Background of the Invention

The Integrity of positioning, navigation and guiding systems is a concept which arose in the aeronautical world, in which an unnoticed positioning error can involve a serious risk for the safety of goods and people.

Almost since its beginning, NAVSTAR GPS system has aroused the interest of authorities and suppliers of airport and air navigation services, given its global coverage and low operational cost. The main obstacle for implementing GPS positioning systems as air navigation systems has always been their inherent lack of Integrity. The NAVSTAR GPS system was not designed for such purposes (the Russian GLONASS system was not either) and therefore it does not provide by itself any type of mechanism assuring Integrity.

This drawback has been tackled in several ways, and external augmentation systems (local systems such as GBAS or regional systems such as SBAS) monitoring the GPS (or GPS + GLONASS) system errors and sending to the users Integrity information and corrections, and autonomous Integrity monitoring (RAIM) systems have been designed. In practice, there is currently an operative SBAS system (the American WAAS system) and a second SBAS system in the qualification stage (the European EGNOS system), both of which are subject to the rules and requirements established by the RTCA in its RTCA/DO-229 standard, which imposes the simultaneous use of RAIM algorithms in SBAS equipment certified for air navigation.

The Integrity concept has recently started to go beyond the limits of air navigation and has shown to be very useful in other contexts, such as those of the applications referred to as "Liability Critical". This opens up a large field of applications in which Integrity is a key concept and the capacity to autonomously monitor Integrity in all of them is therefore important.

RAIM (Receiver Autonomous Integrity Monitoring) technology has been developed within this Integrity monitoring concept in order to evaluate the integrity of GPS signals. Classic RAIM systems use the information from a single measurement epoch to detect and isolate faults; to that end, RAIM checks the consistency of the available pseudorange measurements, using redundant measurements.

Description of the Invention

The invention relates to a method of estimating the clock-position of a GNSS receiver, based on observations from several measurement epochs according to claim 1. Preferred embodiments of the method are described in the dependent claims.

The present invention arises as an autonomous Integrity monitoring method improving the observability of the degraded measurements and therefore the Integrity features with respect to traditional RAIM methods. To that end, the present invention, in contrast to classic RAIM systems which are based on information from a single epoch, accumulates observations over time and uses external information about the movement of the receiver throughout the considered time interval.

The present invention relates to a method of estimating the clock-position of a GNSS receiver based on pseudorange measurements $\rho_i$ of a group of epochs $i$ of measurement $i = 1,...,N$ and $M_i$ is the number of pseudorange measurements in epoch $i$. The method comprises:

- constructing a floating path from change of state estimations $\tilde{V}_i$ between successive epochs $i$, $i+1$; $i = 1,...,N -1$, said estimations being provided as an input by a change of state estimation algorithm (understanding floating to mean that, although the shape, size and spatial orientation of the path are known, the path is not completely determined because a position, a point at which said floating path can be anchored so that it is completely fixed, is needed);
- determining an anchor point for said path by an iterative least squares process estimating the state vector $\tilde{S}_1$ of the receiver in a pre-established anchor epoch within the $N$ measurement epochs of the path, in which said least squares process is carried out by means of a valid observation matrix $H$ for the $N$ epochs, which is constructed by juxtaposing the observation matrices $H_i$ associated to each epoch $i$.

An observation matrix $H_i$ associated to the epoch $i$ is to be understood as the observation matrix commonly used for absolute instantaneous GPS positioning by means of least squares, i.e. the four-column matrix the rows of which are the line of sight unit vectors of the different satellites in sight in the epoch $i$, juxtaposed with a 1 associated to the receiver clock component. Each matrix $H_i$ therefore depends on the position of the receiver in the epoch $i$ insofar as the line of sight vectors vary with said position, which may be different in each of the epochs. As said positions are unknown *a priori,* in practice the matrices $H_i$ are constructed from hypotheses about said positions. Once a hypothesis $\tilde{S}_1$ about the state vector in the anchor epoch is made, the floating path is fixed, automatically inducing the state vectors and therefore the positions in all the epochs $i = 1,...,N$. This allows constructing the matrices $H_i$ and therefore the matrix $H$, as well as measurement residuals, which are understood as the differences between the pseudorange measurements (corrected with all the available information for improving their accuracy, if any is available) and the geometric distances to the satellites from the hypothetical positions (corresponding to what would be expected to be obtained as pseudorange measurements from said positions).

The aforementioned least squares process precisely consists of estimating an innovation of the state vector in the anchor epoch which minimizes said residuals, whereby presumably a better estimation of said state vector $\tilde{S}_1$ and subsequently of the state vectors in the remaining epochs $i = 2,...,N$ is obtained. This process is iterated until the innovation of $\tilde{S}_1$ is insignificantly small (until convergence occurs).

In other words, the present invention uses successive change of state estimations to construct a "floating path" of the receiver and estimates a state vector $\tilde{S}_1$ (position and clock) in any of the involved measurement epochs to which said path can be anchored. Which of the $N$ epochs is the anchor epoch (the first or the last epoch for example) will have been previously fixed (typically as a design or configuration parameter). It will be assumed herein that the anchor epoch is the first epoch ($i = 1$) although the choice of any other epoch would be equally valid. Said estimation of $\tilde{S}_1$ is carried out iteratively by means of a least squares process such that the measurement residuals for all the available measurements $M_i$ in the $N$ epochs defining said floating path are globally minimized at the end of the iteration.

According to a preferred embodiment, the number of measurement epochs $N$ used for the adjustment is variable. In low sky visibility environments, such as an urban center, it may not have been possible to estimate the change of state vectors $\tilde{V}_i$. There also may not be enough vectors $\tilde{V}_i$ in other situations, such as for example the first epochs after starting the receiver. One way of maximizing the operating capacity of the proposed method is to allow reducing in such circumstances the number $N$ of measurement epochs used to adjust to the set of available contiguous change of state vectors $\tilde{V}_i$, given that the contiguity in time of said vectors is necessary for reconstructing a floating path.

A first (and perhaps rough) estimation $\tilde{S}_1$ of the state (position and clock) of the receiver of the anchor epoch can optionally be provided as an additional input for the purpose of speeding up the convergence of the least squares process.

Said least squares process will preferably be a weighted least squares process by means of a weight matrix $W$ for the pseudorange measurements of all the involved epochs, using for that purpose the covariance matrices $Q_i$ ($i = 1,...,N -1$) of the estimation error of the change of state vectors $\tilde{V}_i$ ($i = 1,...,N -1$) involved, in addition to the covariance matrices $C_i$ ($i = 1,..., N$) of the measurement noise (which is characterized by configuration). The vectors $\tilde{V}_i$ and the matrices $Q_i$ are provided as an input for a change of state estimation algorithm between consecutive epochs.

The method of the present invention estimates the state of the receiver in the chosen epoch for the anchoring such that the measurement residuals are globally minimized for the entire path, i.e. for the entire set of epochs considered in the algorithm. This global minimization means that the sum of the squares of all the measurement residuals -those of all the satellites and in all the considered epochs- is minimum. It is therefore a least squares estimation using the measurements of all the considered epochs, which is possible through the change of state information between consecutive epochs.

The change of state information (and its covariance matrix) can come from a RAIM Carrier Phase-type algorithm, estimating the change of state vector, position and clock, by means of a least squares process, using the time differences of phase measurements between consecutive measurement epochs (for each satellite) as observations. With said observations and by means of an observation matrix that is essentially equal to that used in a standard absolute position and clock calculation process by means of least squares, a change of state vector estimation is obtained. Said estimation is very accurate and robust due to the use of phase measurements instead of code measurements. The use of phase measurements is possible -unlike in the absolute estimation of position and clock- due to the fact that the observables used are simple time differences, which are free from phase ambiguity. The resulting change of state estimation can be combined with a degraded measurement detection-exclusion process (by cycle jumps for example) such as those usually used in RAIM algorithms and operating by means of analyzing the consistency of the estimation residuals. This improves the accuracy of the estimation and allows ensuring the Integrity thereof. The matrix resulting from the estimation of said change of state by means of the least squares process which has just been described can be provided as the covariance matrix of each change of state.

An alternative way of obtaining change of state information in order to provide it as an input is by means of estimating the velocity and the drift of the receiver clock (using carrier frequency Doppler shift measurements for example), taking into account the time elapsed between measurement epochs. A change of state estimation can thus be obtained by the integration over time of both the velocity and the drift of the clock, and it is also possible to obtain a covariance matrix from the estimation process. However, the drawback of this process is that it does not take into account possible accelerations and higher order effects. To that end, it is preferable to provide a change of state estimation that is as direct as possible, such as that which could be obtained using the measurement differences between consecutive epochs as observations.

The present invention also provides a method of detecting degraded or low-quality measurements using the conducted estimation of the state vector $\tilde{S}_1$ (position-clock) in the anchor epoch, i.e. which is also based on using the information accumulated throughout several measurement epochs.

According to the present invention, this method of detecting and isolating degraded measurements comprises:

- applying a method of estimating the clock-position of a GNSS receiver with or without weighting as described above;
- using the state estimation $\tilde{S}_1$ in the anchor epoch to determine *a posteriori* measurement residuals;
- using said *a posteriori* measurement residuals, together with the weight $W$ and observation $H$ matrices (if it is by means of weighted least squares), or together with the observation matrix $H$ (if it is not weighted), used in said state estimation in the anchor epoch as an input to a detection and isolation process.

In other words, the state in the anchor epoch, once estimated, induces in turn *a posteriori* measurement residuals. Said residuals, together with the aforementioned matrices $H$ and $W$ (the latter matrix only in the weighted case) used in the estimation by means of least squares (or weighted least squares), are used as the input of a degraded measurement detection-isolation process (Fault Detection and Isolation or FDI) such as any of those implementing the traditional RAIM algorithms for example. The chosen specific FDI mechanism is an implementation option.

In the event of fault detection, said mechanism will preferably search for a single measurement among all those involved in the process as the most likely to contain an error which is causing said fault. In other words, the isolation will be for a single measurement. In such a case, the estimation, detection and isolation process can be iterated excluding the erroneous measurement in question (i.e., excluding the erroneous measurement for the estimation of the anchor point, as a means to ensure the integrity of said estimation). This iterative process ends when the detection conditions disappears or when there are not enough measurements to continue, in which case the anchor epoch must be declared invalid or with unavailable Integrity.

In addition to the state vector estimation in the anchor epoch, and to a covariance matrix associated to said estimation, a set of validity/invalidity flags for each of the measurements corresponding to the measurement epochs considered in the process is obtained as a result of this process.

The advantages of this method compared to traditional RAIM methods are:

- a gain in the observability of the errors, given that a larger number of measurements is used to estimate the same amount of parameters as in a traditional RAIM algorithm.
- it uses the time variability of some of the most dangerous measurement degrading agents in uncontrolled environments (such as NLoS multipath in urban environments) by means of using observations of several different measurement epochs.

*Detailed Description of a Preferred Embodiment of the Invention*

The following table includes the main notation elements used in this description:

| Symbol | Description | Observations |
|---|---|---|
| $N$ | Number of measurement epochs for the adjustment | |
| $S$ | Generic state vector in an epoch (position and clock) | $S = [x, y, z, b]^T$ |
| $\tilde{S}_i$ | State vector (position and clock) estimated in epoch $i$ | $\tilde{S}_i = [\tilde{x}_i, \tilde{y}_i, \tilde{z}_i, \tilde{b}_i]^T$ |
| $\tilde{V}_i$ | Change of state estimated between epochs $i$ and $i + 1$ | $\tilde{V}_i = \tilde{S}_{i+1} - \tilde{S}_i$ |
| $\rho_i$ | Pseudorange measurement vector in epoch $i$ | Measurements uncorrected* by the clock estimation $\tilde{b}_i$ |
| $M_i$ | Number of pseudorange measurements in epoch $i$ | Size of $\rho_i$ |
| $d_i$ | Geometric range vector in epoch $i$ with respect to a generic point $[x,y,x]^T$ | $d_i = d_i(x, y, z)$ |
| $\tilde{d}_i$ | Geometric range estimated in epoch $i$ with respect to point $[\tilde{x}_i, \tilde{y}_i, \tilde{z}_i]^T$ | Distances between the satellites** and point in $[\tilde{x}_i, \tilde{y}_i, \tilde{z}_i]^T$ <br> epoch $i$: <br> $\tilde{d}_i = d_i(\tilde{x}_i, \tilde{y}_i, \tilde{z}_i)$ |
| $r_i$ | Observation residual vector in epoch $i$ with respect to an arbitrary state $S$ | $r_i = r_i(S_i) =$ <br> $(\rho_i - b_i) - d_i(x_i, y_i, z_i)$ |
| $H_i$ | Observation matrix in epoch $i$ | $H_i = -\dfrac{\partial r_i}{\partial S_i}(\tilde{S}_i)$ |
| $C_i$ | Covariance matrix of the measurement noise $\varepsilon_i$ of pseudorange $\rho_i$ | $M_i$x$M_i$ Matrix |
| $R_i$ | Covariance matrix of the observation error in epoch $i$ | $M_i$x$M_i$ Matrix |
| $Q_i$ | Covariance matrix of the estimation error $\delta_i$ of change of state $\tilde{V}_i$ | 4x4 Matrix |
| $P$ | Covariance matrix of the estimation error of $\tilde{S}_1$ | 4x4 Matrix |

\* The observations must include all the other available corrections (ionopshere, troposhere, relativistic effect...), assuming that they do not noticeably change with small changes of the state vector.
\*\* The positions of the satellites are those stated in the GPS ephemerides. The corresponding orbital errors can be corrected if there is external information (EGNOS, for example).

An exemplary embodiment of the method of the invention is set forth below, in which the following information must be provided to it as input:

■ Number $N$ of epochs the information of which will be used in the process.

■ Change of state estimations $\tilde{V}_i$ (position and clock) of the receiver between consecutive epochs $i, i + 1$; $i = 1,...,$ $N$ -1. If all the estimations $\tilde{V}_i$ are not available, the number $N$ of measurement epochs is reduced accordingly, such that the available vectors $\tilde{V}_i$ are contiguous over time and therefore define a (floating) gap-free path including among its epochs the anchor epoch the state vector $S_1$ of which is to be estimated.

■ For each change of state estimation $\tilde{V}_i$, the corresponding covariance matrix $Q_i$ of the estimation error.

■ The pseudorange measurement vector $\rho_i$ for all the considered epochs $i = 1,...,N$ , with $M_i$ measurements for each epoch $i$.

■ Standard deviation of the pseudorange measurement error (characterized by configuration), in the form of the covariance matrix $C_i$ of the measurement noise $\varepsilon_i$ for each epoch $i = 1,...,N$.

■ Position of each satellite, for each $j = 1,...,M_i$ and each $i = 1,...,N$ .

■ Probability of target false alarm $P_{FA}$, which is a parameter determined by configuration.

As has been indicated, if the measurements do not enter corrected by effects that do not depend or depend weakly on the state (ionosphere, for example), the necessary information for correcting them must also be provided.

And the method of the invention provides the following information as output information:

■ Adjusted state vector $\tilde{S}_1$.

■ Covariance matrix $P$ of the estimation error of $\tilde{S}_1$.

■ Measurement validity flag, for each $j = 1,...,M_i$ and each $i = 1,...,N$ .

In this described embodiment, the method of detecting degraded or low-quality GPS measurements is implemented with a RAIM-type mechanism based on the analysis of residuals of the iterative estimation by means of the weighted least squares (WLSQ) adjustment of the state vector $\tilde{S}_1$. As any RAIM algorithm, it consists of an estimation process, a detection process and an isolation process. This algorithm is distinguished from other RAIM-type algorithms in the information used and the use made of such information for the estimation part (of $\tilde{S}_1$), which is explained in more detail in the following paragraphs.

The detection and isolation processes (included in the FDI, Fault Detection and Isolation, concept) subsequent to the estimation of $\tilde{S}_1$ and using the corresponding estimation residuals may be any that are usually used in RAIM algorithms. A specific FDI process based on a chi-square test (for detection) and the parity space projection (for isolation) will be specified herein.

**Estimation:**

In each WLSQ iteration, the estimated value of $\tilde{S}_1$ in the previous iteration is taken as the *a priori* state vector associated to the first measurement epoch. In the first iteration, an arbitrary state vector can be used if this *a priori* estimation is not available, although it is recommendable to include this estimation as an input for greater processing speed and stability. *A priori* state vectors of the remaining epochs can be obtained by means of the propagation of $\tilde{S}_1$ through the change of state vectors:

$$\tilde{S}_i = \tilde{S}_1 + \sum_{j=1}^{i-1} \tilde{V}_j$$

In general, the function $f_i : R^4 \to R^4$ can be defined for each $i = 1,...,N$ , which function is given by:

$$f_i(S) = S + \sum_{j=1}^{i-1} \tilde{V}_j$$

where $S$ is a generic 4-dimensional vector.

Therefore:

$$\dot{\widetilde{S}}_i = f_i(\widetilde{S}_1)$$

The corresponding observation residuals will be:

$$r_i = r_i(\dot{\widetilde{S}}_i) = (\rho_i - \dot{\widetilde{b}}_i) - d_i(\widetilde{x}_i, \widetilde{y}_i, \widetilde{z}_i)$$

To construct an observation matrix relating the observations of all the epochs to the state of the first epoch, the partial derivatives of the residuals of each epoch must be calculated with respect to said state. There will thus be an observation equation of the following type:

$$\begin{bmatrix} r_1 \\ r_2 \\ \vdots \\ r_N \end{bmatrix} = \begin{bmatrix} -\dfrac{\partial r_1}{\partial S_1}(\widetilde{S}_1) \\ -\dfrac{\partial r_2}{\partial S_1}(\widetilde{S}_1) \\ \vdots \\ -\dfrac{\partial r_N}{\partial S_1}(\widetilde{S}_1) \end{bmatrix} \cdot \Delta S_1$$

which can be written in a more compact form as:

$$r = -\frac{\partial r}{\partial S_1}(\widetilde{S}_1) \cdot \Delta S_1$$

wherein:

$$r = \begin{bmatrix} r_1 \\ r_2 \\ \vdots \\ r_N \end{bmatrix}$$

and $\Delta S_1$ represents the innovation of the state with respect to $\widetilde{S}_1$ of the new WLSQ iteration, such that the following expression would be considered in the next iteration:

$$\dot{\widetilde{S}}_1 = \widetilde{S}_1 + \Delta S_1$$

This forms part of the (weighted or non-weighted) least squares estimation technique in a non-linear problem, and is based on the fact that in the proximity of the state vector which is to be estimated, the non-linear observation function can be linearly approximated according to Taylor's formula:

$$r(\widetilde{S}_1 + \Delta S_1) \approx r(\widetilde{S}_1) + \frac{\partial r}{\partial S_1}(\widetilde{S}_1) \cdot \Delta S_1 = r(\widetilde{S}_1) - r(\widetilde{S}_1) = 0$$

The observation submatrices

$$-\frac{\partial r_i}{\partial S_1}(\widetilde{S}_1)$$

can be rewritten in a more recognizable manner by observing that:

$$\frac{\partial r_i}{\partial S_1}(\widetilde{S}_1) = \frac{\partial r_i}{\partial S_i}(\widetilde{S}_i)$$

The residuals are indeed rewritten as:

$$r_i = r_i(f_i(\widetilde{S}_1))$$

Therefore:

$$\frac{\partial r_i}{\partial S_1}(\widetilde{S}_1) = \frac{\partial r_i}{\partial S_i}(\widetilde{S}_i) \cdot \frac{\partial f_i}{\partial S_1}(\widetilde{S}_1) = \frac{\partial r_i}{\partial S_i}(\widetilde{S}_i) = -H_i$$

and given that

$$\frac{\partial f_i}{\partial S} = I_{4x4}$$

the result is that:

$$-\frac{\partial r_i}{\partial S_1}(\widetilde{S}_1) = H_i$$

In practice, the observation matrix $H_i$ in epoch $i$ (for each $i = 1,...,N$) is the four-column matrix the $j$-th row of which (for each $j = 1,...,M_i$) is the line of sight unit vector from the $j$-th satellite used in the solution to the estimated position of the user in epoch $i$ (which is part of $\widetilde{S}_i$) juxtaposed with a 1 associated to the receiver clock component. Matrix $H_i$ is therefore the well known observation matrix commonly used in the absolute and instantaneous GPS positioning problem (with information from a single epoch).

In other words, if the state vector breaks down into position and clock as:

$$S = \begin{bmatrix} \bar{p} \\ c \end{bmatrix}$$

in which $\bar{p}$ is the (three-dimensional) position vector and $c$ is the receiver clock phase difference, and if a state vector estimation in epoch $i$ (the a *priori* state vector considered above for example) is therefore similarly indicated as:

$$\tilde{S}_i = \begin{bmatrix} \tilde{\bar{p}}_i \\ \tilde{c}_i \end{bmatrix}$$

the observation matrix $H_i$ in epoch $i$ is then written as:

$$H_i = \begin{bmatrix} \bar{e}_1^T & 1 \\ \bar{e}_2^T & 1 \\ \vdots & \vdots \\ \bar{e}_{M_i}^T & 1 \end{bmatrix}$$

wherein

$$\bar{e}_j = \frac{\bar{p} - \bar{p}_j}{\left\| \bar{p} - \bar{p}_j \right\|}$$

where $\bar{p}_j$ is the position of the $j$-th satellite in sight in that epoch.

The observation equation is as follows:

$$r = H \cdot \Delta S_1$$

wherein

$$H = \begin{bmatrix} H_1 \\ H_2 \\ \vdots \\ H_N \end{bmatrix}$$

In other words, the observation matrix is obtained by juxtaposing observation matrices from the individual LSQ problems of each of the measurement epochs.

In the non-weighted version of the method, the innovation of the state $\Delta S_1$ (which will allow obtaining the corresponding estimation residuals) is estimated as:

$$\Delta S_1 = (H^T \cdot H)^{-1} \cdot H^T \cdot r$$

In the weighted version of the method, it is necessary to further construct the weight matrix $W$ which will allow estimating $\Delta S_1$ as:

$$\Delta S_1 = (H^T \cdot W \cdot H)^{-1} \cdot H^T \cdot W \cdot r$$

The weight matrix must reflect the fact that the uncertainty of the residuals of epoch $i$ is greater the farther said epoch is from the first epoch, since change of state estimations between consecutive epochs, each of which has an associated uncertainty (covariance matrix), are used to calculate them. Therefore, and as is natural in a WLSQ estimation, $W$ is the inverse of the covariance matrix $R$ of the observations (residuals). Said covariance matrix is calculated from the covariance matrices $C_i$ of the measurement noise and from the covariance matrices $Q_i$ of the estimation error of the change of state vectors $\tilde{V}_i$.

The following hypotheses are assumed throughout the following deduction, which hypotheses will subsequently be validated or refuted through the detection process described below. [In addition to these hypotheses, the usual hypotheses involved in any LSQ or WLSQ problem, such as the fact that the errors are random variables with a zero mean, etc., are also assumed.]

Hypothesis 1: measurement errors between consecutive epochs are independent.

This hypothesis means that if the error vector of the measurements $\rho_i$ is called $\varepsilon_i$ and the covariance matrix of $\varepsilon_i$ is $C_i$, then the covariance matrix of $\varepsilon$ is:

$$C = \begin{bmatrix} C_1 & 0 & \cdots & 0 \\ 0 & C_2 & \cdots & 0 \\ \vdots & \vdots & \ddots & \vdots \\ 0 & 0 & \cdots & C_N \end{bmatrix}$$

where

$$\varepsilon = \begin{bmatrix} \varepsilon_1 \\ \varepsilon_2 \\ \vdots \\ \varepsilon_N \end{bmatrix}$$

Hypothesis 2: the errors of change of state estimation are independent from one another.

This hypothesis means that, if the error vector of the change of state estimation $\tilde{V}_i$ is called $\delta_i$ and the covariance matrix of $\delta_i$ is $Q_i$, then the covariance matrix of $\delta$ is:

$$Q = \begin{bmatrix} Q_1 & 0 & \cdots & 0 \\ 0 & Q_2 & \cdots & 0 \\ \vdots & \vdots & \ddots & \vdots \\ 0 & 0 & \cdots & Q_{N-1} \end{bmatrix}$$

where

$$\delta = \begin{bmatrix} \delta_1 \\ \delta_2 \\ \vdots \\ \delta_{N-1} \end{bmatrix}$$

Hypothesis 3: the errors $\varepsilon_i$ are statistically independent of the errors $\delta_j$, whatever $i$ and $j$ may be.

Assume that $R_i$ is the covariance matrix of $r_i$. According to the preceding statistical independence hypotheses, it is immediately found that

$$E[r_i \cdot r_j^T] = 0, \quad \forall i \neq j$$

and therefore:

$$W^{-1} = R = \begin{bmatrix} R_1 & 0 & \cdots & 0 \\ 0 & R_2 & \cdots & 0 \\ \vdots & \vdots & \ddots & \vdots \\ 0 & 0 & \cdots & R_N \end{bmatrix}$$

Before describing the FDI processes, the last objective is to explain and justify the $R_i$ calculation process according to the $C_i$ and $Q_i$ matrices. First, it is observed that the residuals depend on the *a priori* estimation of the state. To obtain the covariance of the residuals in a generic LSQ or WLSQ problem, it is assumed that the *a priori* estimation of the state coincides with the actual state. This is mathematically justified by the fact that the expectation for the estimation of the state is the actual state (i.e., the LSQ or WLSQ estimator is unbiased). The same will be done to estimate the covariance of these residuals.

It is therefore checked that (ignoring the terms due to non-linearity, which become infinitesimal close to the actual state and, therefore, do not affect the statistics):

$$r_i = \varepsilon_i + H_i \cdot \sum_{j=1}^{i-1} \delta_j$$

Given that all the random terms of the second component of the preceding equation are statistically independent, the covariance of $r_i$ can be calculated as:

$$E[r_i \cdot r_i^T] = Cov(r_i) = Cov(\varepsilon_i) + H_i \cdot \sum_{j=1}^{i-1} Cov(\delta_j) \cdot H_i^T$$

in other words:

$$R_i = C_i + H_i \cdot \sum_{j=1}^{i-1} Q_j \cdot H_i^T$$

As a marginal note, it should be mentioned that as in any WLSQ problem, the final covariance of the error of the estimated state vector $\tilde{S}_1$ is:

$$P = (H^T \cdot W \cdot H)^{-1}$$

which makes sense only in the weighted version of the method, since the non-weighted method ignores the covariances of the errors involved in the estimation process (measurement errors and estimation errors of the change of state vectors), therefore it does not allow estimating the covariance of the estimation error of $\tilde{S}_1$.

**Detection:**

This section describes the preferred detection method in its weighted version. The entire content of this section is valid for the non-weighted version by simply substituting (where it appears) the weight matrix W with the identity matrix.
The detection method preferred and used in the preferred embodiment of the invention is by means of the chi-square hypothesis test. By means of this test, all the hypotheses assumed in the preceding paragraphs are simultaneously tested. If said hypotheses are correct, then the *a priori* residual vector

$$r = \begin{bmatrix} r_1 \\ r_2 \\ \vdots \\ r_N \end{bmatrix}$$

is a random vector normally distributed with a null mean and the covariance matrix of which is $R$. Therefore, the *a posteriori* residual vector is such that its quadratic norm (according to the metric defined by $W$) is distributed as a chi-square with $M$ - 4 degrees of freedom (where

$$M = \sum_{i=1}^{N} M_i$$

is the total number of measurements used in the estimation process). The mentioned quadratic norm of the *a posteriori* residual can be calculated as:

$$n^2 = r^T \cdot \left( W - W \cdot H \cdot (H^T \cdot W \cdot H)^{-1} \cdot H^T \cdot W \right) \cdot r$$

Therefore,

$$n^2 \in \chi^2_{M-4}$$

Where $T(1 - P_{FA}, M - 4)$ is the percentile of the distribution $\chi^2_{M-4}$ associated to the probability $1 - P_{FA}$, i.e., the real value that leaves to its left an accumulated probability of $1 - P_{FA}$ (and therefore, leaves $P_{FA}$ to its right) for the

distribution $\chi^2_{M-4}$. The detection test consists of declaring failure if and only if the value of $n2$ exceeds that of $T(1 - P_{FA}, M - 4)$. If the hypotheses are not met, the deductions that have been made until reaching $n2 \in \chi^2_{M-4}$ are not valid, and therefore it is unlikely that the test will be passed (i.e., without declaring failure). If, however, the hypotheses are met, then it is true that $n2 \in \chi^2_{M-4}$, but there is still a probability that the test will not be passed (i.e., failure will be declared). That probability, known as the false alarm probability, is, by construction, precisely $P_{FA}$.

**Exclusion:**

This section also describes the preferred exclusion method in its weighted version. The entire content of this section is valid for the non-weighted version by simply substituting (where it appears) the weight matrix $W$ with the identity matrix.

This process is carried out only in the event that a detection has occurred (according to the previous process). It is not possible to determine with absolute certainty which measurement or measurements are responsible (due to the magnitude of the error they contain) for the fact that a detection has occurred. All that is known about the measurement error vector is what remains of it after the estimation process, and this is precisely the *a posteriori* residual vector.

The *a posteriori* residual vector is the result of projecting the measurement error vector onto the parity space (parity space is the orthogonal complement of the space of states defined by the observation matrix). The measurement error vector is unknown, but its projection is known. If the error vector was known, the guilty measurement would be searched for, seeing which of the coordinates of said vector is larger, i.e. seeing which of the M vectors of the base

$$\left\{ \begin{bmatrix} 1 \\ 0 \\ \vdots \\ 0 \end{bmatrix}, \begin{bmatrix} 0 \\ 1 \\ \vdots \\ 0 \end{bmatrix}, \dots, \begin{bmatrix} 0 \\ 0 \\ \vdots \\ 1 \end{bmatrix} \right\}$$

is the closest to the error vector $\varepsilon$. Since the vector $\varepsilon$ is unknown, but its projection is known, the best option is to also project the vectors of the base onto the parity space and see which is the closest to the projection of $\varepsilon$ (i.e., to the *a posteriori* residual vector). The proximity will be measured in terms of the angle formed by two vectors (that of residuals with each of the projections of the vectors of the base) or, equivalently, in terms of the cosine of said angle (in absolute value since the orientation is irrelevant in this case).

If the projection onto the parity space is called $\Pi$, $\Pi$ can be described in terms of a matrix as:

$$\Pi = W - W \cdot H \cdot (H^T \cdot W \cdot H)^{-1} \cdot H^T \cdot W$$

Note that $\Pi$ is a symmetric matrix (i.e. $\Pi^T = \Pi$) and that since it is a projection matrix, it is essential that $\Pi \cdot \Pi = \Pi$ is met and therefore $\Pi^T \cdot \Pi = \Pi$.

The cosine of the angle formed by the *a posteriori* residual and the projection of a generic vector $\eta$ will then be:

$$\cos(\Pi \cdot r, \Pi \cdot \eta) = \frac{r^T \cdot \Pi^T \cdot \Pi \cdot \eta}{\sqrt{r^T \cdot \Pi^T \cdot \Pi \cdot r} \cdot \sqrt{\eta^T \cdot \Pi^T \cdot \Pi \cdot \eta}} = \frac{r^T \cdot \Pi \cdot \eta}{\sqrt{r^T \cdot \Pi \cdot r} \cdot \sqrt{\eta^T \cdot \Pi \cdot \eta}}$$

If the vectors of the base (one per each measurement involved in the estimation process) are called $\{e_1, e_2, \dots, e_M\}$, the result of the isolation process will be the measurement that maximizes said cosine, i.e., the isolated measurement will be *j*-th when (and only when):

$$\left| \cos\left(\Pi \cdot r, \Pi \cdot e_j\right) \right| = \max_{i=1,2,\ldots,M} \left| \cos\left(\Pi \cdot r, \Pi \cdot \dot{e_i}\right) \right|$$

In the case of detection, the method of the present invention must be iterated again, excluding the isolated measurement of the inputs thereof. This process must be recursively repeated until no detection occurs, in which case all the measurements that have been isolated in any of the iterations will be declared invalid; or until it is impossible to continue due to a lack of measurements, in which case at least all the measurements belonging to the anchor epoch must be declared invalid. Note that given that four parameters are estimated (position and clock), at least four measurements are needed to carry out the estimation process, at least five for the detection process and at least six for the isolation process.

The invention has been described according to a preferred embodiment thereof, but for a person skilled in the art it will be obvious that other variations can be introduced without exceeding the object of the claimed invention.

## Claims

1.   A method of estimating the clock-position of a GNSS receiver based on pseudorange measurements $\rho_i$ of a group of epochs $i$ of measurement $i = 1,\ldots,N$, where $M_i$ is the number of pseudorange measurements in the epoch $i$; the method comprises:

   - constructing a floating path from change of state estimations $\tilde{V}_i$ between successive epochs which are provided as input by a change of state estimation algorithm;
   - determining an anchor point for said path by an iterative least squares process estimating the state vector $\tilde{S}_1$ of the receiver in a pre-established anchor epoch within the measurement epochs of the path, wherein said least squares process is carried out by means of a valid observation matrix $H$ for the $N$ epochs defining said floating path, said observation matrix $H$ being constructed by juxtaposing the observation matrices $H_i$ associated to different epochs $i = 1,\ldots,N$, wherein each observation matrix $H_i$ is a four-column matrix the rows of which are the line of sight unit vectors of the different satellites in sight in the epoch $i$, juxtaposed with a 1 associated to the receiver clock component.

2.   A method according to claim 1, wherein said least squares process is weighted by means of a weight matrix $W$ of the pseudorange measurements for the $N$ epochs defining said floating path, and which is calculated by means of the juxtaposition and weighted sum of the covariance matrices $C_i$ of the pseudorange noise associated to the different measurements, which is pre-established by configuration, using the covariance matrices $Q_i$ of the error of the change of state estimation vectors $\tilde{V}_i$ as factors of said weighting, where the vectors $\tilde{V}_i$ and the matrices $Q_i$ are provided as input by a change of state estimation algorithm between consecutive epochs.

3.   A method according to any of claims 1-2, wherein the number $N$ of measurement epochs used is variable.

4.   A method according to any of claims 1-3, wherein said change of state estimation algorithm is a RAIM Carrier Phase -type algorithm estimating the change of state vector $\tilde{V}_i$ by means of a least squares process using for each satellite the time differences of phase measurements between consecutive measurement epochs.

5.   A method according to any of claims 1-3, wherein said change of state estimation algorithm is a standard speed estimation algorithm by means of using Doppler measurements.

6.   A method of detecting and isolating degraded measurements comprising:

   - applying a method of estimating the clock-position of a GNSS receiver according to any of claims 1-5;
   - using the estimation of the state vector $\tilde{S}_1$ in the anchor epoch to determine *a posteriori* measurement residuals;
   - using said of a *posteriori* measurement residuals together with the observation matrix $H$ used in said state estimation in the anchor epoch as input to a detection and isolation process.

7.   A method of detecting and isolating degraded measurements comprising:

   - applying a method of estimating the clock-position of a GNSS receiver according to any of claims 2-5;

- using the estimation of the state vector $\tilde{S}_1$ in the anchor epoch to determine *a posteriori* measurement residuals;
- using said *a posteriori* measurement residuals together with the weight $W$ and observation $H$ matrices used in said state estimation in the anchor epoch as input to a detection and isolation process.

8. A method according to any of claims 6-7, wherein said detection and isolation process in the case of failure detection, searches a single erroneous measurement among all the measurements as the most probable of containing an error.

9. A method according to claim 8, wherein the detection and isolation process is iterated, excluding said erroneous measurement from the beginning for the estimation of the anchor point.

**European Patent Office**

**EUROPEAN SEARCH REPORT**

Application Number

EP 07 38 0249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOSEPH M STRUS ET AL: "Precise Point Positioning Method for a Static Survey in a High Multipath Environment" PROCEEDINGS OF THE 17TH INTERNATIONAL TECHNICAL MEETING OF THE SATELLITE DIVISION OF THE INSTITUTE OF NAVIGATION ION GNSS,, 21 September 2004 (2004-09-21), pages 1855-1863, XP007905088 p. 1855 to 1858 and 1860 sections: "abstract", "introduction", "problem formulation", "TOA formulation", "covariance analysis" and "measurement models" | 1-9 | INV. G01S5/14 |
| A | WALTER AND P ENGE T: "Weighted RAIM for Precision Approach" 1 September 1995 (1995-09-01), PROCEEDINGS OF THE INSTITUTE OF NAVIGATION (ION) GPS, XX, XX, PAGE(S) 1995 - 2004 , XP002351332 * the whole document * | 2-9 | |
| A | US 2005/248485 A1 (HATCH RONALD R [US] ET AL) 10 November 2005 (2005-11-10) * the whole document * | 4,5 | TECHNICAL FIELDS SEARCHED (IPC) G01S |

The present search report has been drawn up for all claims

| Place of search | Date of completion of the search | Examiner |
|---|---|---|
| Munich | 14 July 2008 | González Moreno, J |

EPO FORM 1503 03.82 (P04C01)

## ANNEX TO THE EUROPEAN SEARCH REPORT
## ON EUROPEAN PATENT APPLICATION NO.

EP 07 38 0249

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2008

| Patent document cited in search report | Publication date | Patent family member(s) | Publication date |
|---|---|---|---|
| US 2005248485 A1 | 10-11-2005 | AU 2005246186 A1<br>BR PI0510749 A<br>CA 2565787 A1<br>CN 101002105 A<br>EP 1747479 A1<br>JP 2007536510 T<br>WO 2005114250 A1 | 01-12-2005<br>20-11-2007<br>01-12-2005<br>18-07-2007<br>31-01-2007<br>13-12-2007<br>01-12-2005 |

EPO FORM P0459

For more details about this annex : see Official Journal of the European Patent Office, No. 12/82